# FASCICULE DE BREVET EUROPEEN

(11) **EP 4 061 716 B1**
(45) Date de publication et mention de la délivrance du brevet: **20.08.2025**
(21) Numéro de dépôt: 20821329.8
(22) Date de dépôt: 18.11.2020
(51) Int. Cl.: B64D 13/06

(54) **SYSTÈME DE CONDITIONNEMENT D'AIR D'UNE CABINE D'UN VÉHICULE DE TRANSPORT AÉRIEN OU FERROVIAIRE UTILISANT UNE SOURCE D'AIR PNEUMATIQUE ET THERMIQUE DISTINCTE DE LA SOURCE D'AIR DE CONDITIONNEMENT**
KLIMATISIERUNGSSYSTEM EINER KABINE EINES LUFT- ODER SCHIENENTRANSPORTFAHRZEUGS MIT EINER VON DER KLIMATISIERUNGSLUFT ABWEICHENDEN PNEUMATISCH-THERMISCHEN LUFTVERSORGUNG
ENVIRONMENTAL CONTROL SYSTEM OF A CABIN OF AN AIR OR RAILWAY TRANSPORT VEHICLE, THE SYSTEM USING A PNEUMATIC AND THERMAL AIR SOURCE OTHER THAN THE AIR CONDITIONING SOURCE

(30) Priorité: 19.11.2019 FR 1912897
(43) Date de publication de la demande: 28.09.2022
(73) Titulaire: Liebherr-Aerospace Toulouse SAS, 31200 Toulouse (FR)
(72) Inventeur: GALZIN, Guillaume, 31016 TOULOUSE Cedex 2 (FR); BONHOMME, Adrien, 31016 TOULOUSE Cedex 2 (FR); SANCHEZ, Frédéric, 31016 TOULOUSE Cedex 2 (FR)
(74) Mandataire: Bringer IP
(86) Numéro de dépôt international: PCT/FR2020/052104
(87) Numéro de publication internationale: WO 2021/099733

(56) Documents cités:
- EP-A1- 2 998 223
- EP-A1- 3 312 091
- EP-A1- 3 480 113

## Description

### Domaine technique de l'invention

L'invention concerne un système de conditionnement d'air d'une cabine d'un véhicule de transport aérien ou ferroviaire. L'invention concerne plus particulièrement un système de conditionnement d'air d'une cabine d'un véhicule de transport aérien ou ferroviaire utilisant une source d'air chaud et pressurisé comme source d'énergies pneumatique et thermique et utilisant principalement l'air extérieur comme source d'air de conditionnement, c'est-à-dire comme source d'air destiné à alimenter la cabine.

### Arrière-plan technologique

Dans tout le texte, le terme « cabine » désigne tout espace intérieur d'un véhicule de transport aérien ou ferroviaire dont la pression et/ou la température de l'air doit être contrôlée. Il peut s'agir d'une cabine pour passagers, du cockpit de pilotage, d'une soute, et de manière générale de toute zone du véhicule de transport qui nécessite un air à une pression et/ou une température contrôlée. Cet air à une pression et/ou une température contrôlée est fourni par un système de conditionnement d'air.

Habituellement, un système de conditionnement d'air d'une cabine d'un véhicule de transport tel qu'un aéronef (aussi désigné dans tout le texte par les termes de pack de conditionnement d'air) comprend un dispositif de prélèvement d'un air comprimé, plus connu sous la dénomination d'air bleed, sur au moins un compresseur d'un moteur de l'aéronef (tel que par exemple un moteur propulsif ou un moteur auxiliaire de l'aéronef), une turbomachine à cycle à air comprenant au moins un compresseur et une turbine couplés mécaniquement l'un à l'autre, ledit compresseur comprenant une entrée d'air reliée audit dispositif de prélèvement d'air comprimé et une sortie d'air, et ladite turbine comprenant une entrée d'air et une sortie d'air reliée à ladite cabine, pour pouvoir l'alimenter en air à pression et température contrôlées.

Un système de conditionnement d'air classique comprend également des échangeurs de chaleur logés dans un canal de circulation d'un air dynamique prélevé à l'extérieur de l'aéronef, plus connu sous la dénomination d'air RAM. Dans tout le texte qui suit, la notion d'air dynamique fait référence à un air prélevé à l'extérieur de l'aéronef par tous types de moyens connus, tel qu'une écope ou une entrée pariétale, aussi connue sous la dénomination anglaise d'entrée « flush/NACA ».

Il est également fréquent que la turbomachine à cycle à air porte sur son arbre un ventilateur qui s'étend dans le canal de circulation d'air dynamique pour y assurer la circulation d'air en vue du refroidissement de l'air bleed et de l'air comprimé par le compresseur de la turbomachine.

En d'autres termes, un système de conditionnement d'air classique utilise l'air bleed comme source d'énergie thermique, pneumatique et de conditionnement, c'est-à-dire d'air frais destiné à alimenter la cabine.

Le problème général qui se pose de longue date avec ce type de système de conditionnement d'air est de minimiser le prélèvement d'air sur les compresseurs des moteurs, de façon à minimiser l'impact de ce prélèvement d'air sur la consommation de kérosène et sur les performances des moteurs. Un autre problème consiste à pouvoir assurer le contrôle de la température et de la pression en cabine dans toutes les phases de fonctionnement de l'aéronef, y compris dans les phases de décollage, de descente, et au sol.

Enfin, un autre problème réside dans le fait que l'air bleed, prélevé sur un compresseur d'un moteur propulsif de l'aéronef, forme la source d'air de conditionnement de sorte qu'une contamination de l'air prélevé sur les moteurs est transmise à la cabine, ce qui peut être dangereux pour la santé des passagers notamment.

Il a déjà été proposé une solution plus électrique pour pallier cet inconvénient de risque de contamination de l'air de conditionnement qui consiste à utiliser comme source d'air de conditionnement, un air dynamique prélevé à l'extérieur de l'aéronef. En d'autres termes, selon cette solution, le compresseur de la turbomachine à cycle à air est entrainé en rotation par un moteur électrique et est directement alimenté par de l'air ambiant prélevé à l'extérieur de l'aéronef. Cet air comprimé est ensuite refroidi par les échangeurs de chaleur et détendu par la turbine de la turbomachine avant d'alimenter la cabine. Cette solution est intéressante mais nécessite une forte puissance électrique pour entrainer le compresseur en rotation.

Les inventeurs ont donc cherché à proposer une nouvelle architecture d'un système de conditionnement d'air d'une cabine d'un véhicule de transport ferroviaire ou aérien qui permet de pallier les différents inconvénients des différentes solutions actuellement connues.

L'arrière-plan technologique est illustré par le document EP 3 480 113 A1.

### Objectifs de l'invention

L'invention vise à fournir un système de conditionnement d'air d'une cabine d'un véhicule de transport, tel qu'un aéronef, qui permet de limiter les risques de contamination de l'air de conditionnement qui alimente la cabine tout en supprimant la nécessité de recourir à un entrainement électrique du compresseur de la turbomachine.

L'invention vise également à fournir, dans au moins un mode de réalisation de l'invention, un système de conditionnement d'air d'une cabine d'un aéronef qui présente différents modes de fonctionnement dépendant des conditions de vol de l'aéronef.

### Exposé de l'invention

Pour ce faire, l'invention concerne un système de conditionnement d'air d'une cabine d'un véhicule de transport aérien ou ferroviaire tel que revendiqué à la revendication 1. Le système comprend : .
- une source d'air chaud et pressurisé, dite source d'air bleed,
- un canal de circulation d'un air dynamique prélevé à l'extérieur du véhicule de transport,
- un réseau de conduites et vannes de régulation configurées pour pouvoir réguler le débit d'air circulant à travers lesdites conduites en fonction de conditions d'utilisation du véhicule de transport,
- une turbomachine à cycle à air comprenant au moins un compresseur et une turbine, dite turbine de puissance, reliés mécaniquement l'un à l'autre, ledit compresseur comprenant une entrée d'air reliée fluidiquement à une bouche de prélèvement d'air extérieur et une sortie d'air adaptée pour pouvoir être reliée fluidiquement par ledit réseau de conduites, sur commande d'au moins une vanne de régulation, à ladite cabine pour pouvoir l'alimenter en air à pression et température contrôlées, et ladite turbine de puissance comprenant une entrée d'air adaptée pour pouvoir être reliée fluidiquement par ledit réseau de conduites, sur commande d'au moins une vanne de régulation, à ladite source d'air bleed et une sortie d'air,
- au moins un échangeur de chaleur, dit échangeur primaire de refroidissement, logé dans ledit canal de circulation d'air dynamique et comprenant un circuit primaire alimenté par le flux d'air issu dudit compresseur en interaction thermique avec un circuit secondaire alimenté par ledit air dynamique.

Ledit réseau de conduites comprend en outre une conduite, dite conduite de puissance thermique, adaptée pour pouvoir relier fluidiquement, sur commande d'au moins une vanne de régulation, ladite sortie de ladite turbine de puissance et ledit canal de circulation d'air dynamique en amont dudit échangeur primaire de manière à ce que ledit air bleed détendu par ladite turbine de puissance puisse former une source d'énergie thermique dudit air dynamique alimentant ledit circuit primaire dudit échangeur primaire.

Un système de conditionnement d'air selon l'invention permet de manière inédite d'utiliser une source d'air bleed, qui est par exemple un air prélevé sur un moteur propulsif du véhicule de transport tel qu'un aéronef, à la fois comme une source d'énergie pneumatique permettant d'entrainer en rotation la turbomachine à cycle à air, et comme source d'énergie thermique permettant de modifier la température de l'air du canal de circulation d'air dynamique, en amont de l'échangeur primaire de refroidissement, aussi désigné par l'acronyme anglais PHX dans la suite de la demande pour *Primary Heat Exchanger.*

Le système de prélèvement d'air permet ainsi de conférer à l'échangeur primaire de refroidissement une fonctionnalité d'échangeur de chaleur, plus connu sous la dénomination anglaise *d'intercooler,* qui permet de diminuer la température de l'air comprimé pour augmenter sa densité.

En outre, selon les conditions d'utilisation du véhicule de transport (c'est-à-dire selon les conditions de vol lorsque le véhicule de transport est un aéronef), l'apport de puissance froide en amont de la passe froide de l'échangeur primaire qui résulte de la détente de l'air bleed par la turbine de puissance, permet de réduire le débit d'air dynamique (plus connu sous la dénomination anglaise de *ram air*) nécessaire au refroidissement du pack de conditionnement d'air, et donc de réduire la trainée du véhicule de transport.

En d'autres termes, et dans le cas où le système selon l'invention équipe un aéronef, ce dernier contribue à réduire la trainée de l'aéronef en limitant les besoins de prélèvement d'air dynamique à l'extérieur de l'aéronef.

La conduite thermique débouche vers la sortie du circuit primaire de l'échangeur primaire, c'est-à-dire en sortie de la passe chaude de l'échangeur thermique. Ceci permet d'optimiser les échanges thermiques entre les circuits primaire et secondaire de l'échangeur et d'optimiser la stratification, thermique. En d'autres termes, cela permet d'abaisser la température de l'air en sortie de passe chaude lorsque le pack de conditionnement d'air fait du froid (c'est-à-dire qu'il est en mode refroidissement) et d'élever la température de l'air en sortie de passe chaude lorsque le pack fait du chaud (c'est-à-dire qu'il est en mode chauffage).

Le système de conditionnement d'air comprend en outre au moins un deuxième échangeur de chaleur, dit échangeur principal de refroidissement, agencé dans ledit canal de circulation d'air dynamique en amont de ladite conduite de puissance thermique, et comprenant un circuit primaire alimenté par ledit flux d'air issu dudit circuit primaire dudit échangeur primaire en interaction thermique avec un circuit secondaire alimenté par ledit air dynamique.

Le système de conditionnement d'air peut ainsi présenter un mode de refroidissement au cours duquel l'air chaud fourni par le compresseur est refroidi successivement par le PHX et le MHX, puis est véhiculé vers la cabine (après un éventuel passage par une boucle d'extraction d'eau et d'autres équipements du système de conditionnement d'air).

Ledit réseau de conduites comprend en outre une conduite de dérivation adaptée pour pouvoir relier fluidiquement, sur commande d'au moins une vanne de régulation, la sortie du circuit primaire dudit échangeur primaire de refroidissement et le réseau de conduites, en aval dudit échangeur principal de refroidissement, de manière à contourner ledit échangeur principal de refroidissement.

Le système de conditionnement d'air peut ainsi présenter un mode de chauffage au cours duquel l'air fourni par le compresseur se réchauffe au travers du PHX (la passe froide étant alimentée par de l'air chaud issu de la turbine de puissance). Cet air est ensuite dirigé en sortie chaude du MHX en empruntant la conduite de dérivation de sorte que l'air contourne (ou *by-pass* selon la terminologie anglaise) l'échangeur MHX pour rejoindre la sortie du pack de conditionnement d'air sans subir un refroidissement par l'échangeur MHX. Cela permet donc d'injecter un air chaud conditionné dans la cabine.

Avantageusement et selon l'invention, lesdites vannes de régulation sont pilotées pour permettre au moins les modes de fonctionnement suivants :
- un mode de fonctionnement, dit mode de routine, dans lequel ladite entrée de ladite turbine de puissance est alimentée par ladite source d'air bleed pour pouvoir entrainer en rotation ledit compresseur alimenté par un air prélevé à l'extérieur du véhicule de transport, et ladite sortie d'air de ladite turbine de puissance alimente ledit canal d'air dynamique par un air bleed détendu,
- un mode de fonctionnement, dit mode de secours, dans lequel ladite source d'air bleed alimente directement ladite cabine après refroidissement par lesdits échangeurs de chaleur logés dans le canal de circulation d'air dynamique, sans passer par la turbomachine à cycle à air,
- un mode de fonctionnement, dit mode intermédiaire, dans lequel ladite entrée de ladite turbine de puissance est alimentée par ladite source d'air bleed pour pouvoir entrainer en rotation ledit compresseur alimenté par un air prélevé à l'extérieur du véhicule de transport, et ledit air compressé par ledit compresseur est mélangé avec l'air bleed détendu par ladite turbine de puissance en amont du circuit primaire de l'échangeur primaire de refroidissement ou avec l'air bleed issu directement de ladite source d'air bleed.

Un système de conditionnement d'air selon cette variante avantageuse permet ainsi de présenter au moins trois modes de fonctionnement - routine, secours et intermédiaire - en fonction des conditions d'utilisation du véhicule de transport aérien ou ferroviaire.

En particulier, dans le mode routine, l'air fourni à la cabine est exclusivement un air frais prélevé à l'extérieur du véhicule de transport et l'air bleed est utilisé uniquement comme source d'énergie pneumatique d'entrainement du compresseur de la turbomachine et comme source d'énergie thermique (de refroidissement ou de chauffage) selon les besoins.

Dans le mode secours, l'air bleed est utilisé comme source d'air de conditionnement, comme source d'énergie pneumatique et comme source d'énergie thermique. Ce mode permet de pallier une éventuelle défaillance de la turbomachine à cycle à air en permettant de contourner la turbomachine et d'alimenter directement la cabine par l'air bleed refroidi par les échangeurs PHX et MHX logés dans le canal de circulation d'air dynamique.

Enfin, dans le mode intermédiaire, l'air bleed peut être mélangé avec l'air extérieur comprimé par le compresseur de la turbomachine. Ce mode intermédiaire permet notamment de réduire la consommation énergétique du pack de conditionnement d'air. Dans ce mode de fonctionnement intermédiaire, l'air bleed mélangé avec l'air comprimé par le compresseur peut être soit l'air bleed issu directement de la source d'air bleed, soit l'air bleed détendu par la turbine de puissance, soit un mélange des deux.

Avantageusement et selon l'invention, le système comprend en outre un turboventilateur agencé dans ledit canal de circulation d'air dynamique en aval dudit échangeur primaire et adapté pouvoir être relié par ledit réseau de conduites, sur commande d'au moins une vanne de régulation, à ladite source d'air bleed.

Selon cette variante, la circulation d'air dans le canal de circulation d'air dynamique est assurée par un turboventilateur alimenté par l'air bleed. Selon une autre variante, la turbomachine peut comprendre un ventilateur monté sur l'arbre qui relie mécaniquement la turbomachine de puissance et le compresseur.

Avantageusement et selon l'invention, ladite turbomachine à cycle à air comprend en outre :
- au moins une deuxième turbine reliée mécaniquement audit compresseur et à ladite turbine de puissance, ladite deuxième turbine de détente comprenant au moins une première entrée d'air adaptée pour pouvoir être reliée fluidiquement par ledit réseau de conduites, sur commande d'au moins une vanne de régulation, audit échangeur principal de refroidissement et une sortie d'air adaptée pour pouvoir être reliée fluidiquement par ledit réseau de conduites, sur commande d'au moins une vanne de régulation, à ladite cabine,
- une boucle d'extraction d'eau agencée entre ledit échangeur principal de refroidissement et ladite deuxième turbine, de manière à pouvoir extraire l'eau présente dans l'air délivré par ledit échangeur de refroidissement principal avant d'être délivré à cette deuxième turbine de détente.

Selon cette variante avantageuse, le système comprend une boucle d'extraction d'eau et au moins une deuxième turbine montée sur l'arbre de la turbomachine.

Avantageusement et selon l'invention, ladite deuxième turbine de détente comprend au moins une deuxième entrée d'air adaptée pour pouvoir être reliée fluidiquement par ledit réseau de conduites, sur commande d'au moins une vanne de régulation, à une sortie d'air de ladite cabine, dite sortie d'air de récupération, de manière à ce que cet air de récupération évacué de ladite cabine (10) puisse former une source d'énergie pneumatique d'entrainement de ladite deuxième turbine.

Cette variante avantageuse permet de récupérer l'air évacué de la cabine pour fournir une source d'énergie pneumatique additionnelle, permettant ainsi de limiter le besoin en air bleed pour assurer l'entrainement du compresseur par l'intermédiaire de la turbine de puissance. En d'autres termes, la deuxième turbine participe à l'entrainement du compresseur en utilisant l'air de récupération comme une source d'énergie pneumatique additionnelle.

Avantageusement et selon l'invention, le système comprend en outre au moins un échangeur thermique, dit intercooler, comprenant un circuit primaire adapté pour pouvoir être relié fluidiquement par ledit réseau de conduites, sur commande d'au moins une vanne de régulation d'une part à ladite sortie d'air de récupération de ladite cabine et d'autre part à ladite deuxième entrée de ladite deuxième turbine de détente, en interaction thermique avec un circuit secondaire adapté pour pouvoir être relié fluidiquement par ledit réseau de conduites d'une part à ladite sortie d'air dudit compresseur et d'autre part audit échangeur primaire de refroidissement ou audit réseau de conduites, en aval dudit échangeur principal de refroidissement.

Cette variante avantageuse combine les différents avantages déjà discutés et permet en outre, par la présence de l'intercooler, de refroidir la sortie d'air comprimé par le compresseur. En particulier, en vol, l'apport de puissance froide en amont de la passe froide de l'échangeur primaire par la turbine de puissance permet de réduire le débit ram air nécessaire au refroidissement du pack et par voie de conséquence la trainée du véhicule de transport. En outre, l'air cabine, rejeté par le système de pressurisation, est favorablement dirigé au travers de l'intercooler afin de refroidir la sortie du compresseur (récupération thermique de l'énergie cabine). Cet air réchauffé est ensuite détendu jusqu'à la pression extérieure au travers de la deuxième turbine, l'énergie mécanique produite contribuant favorablement à la motorisation de la turbomachine à cycle à air (récupération de l'énergie pneumatique de la cabine). L'air froid issu de la turbine est favorablement injecté sur la passe froide du MHX afin de contribuer à son refroidissement et réduire le besoin en ram air (et donc la trainée de l'avion dans le cas où le système équipe un aéronef).

Avantageusement et selon l'invention, la turbomachine à cycle à air comprend en outre au moins une troisième turbine reliée mécaniquement audit compresseur, à ladite turbine de puissance et à ladite deuxième turbine de détente, ladite troisième turbine comprenant une première entrée d'air adaptée pour pouvoir être reliée fluidiquement par ledit réseau de conduites, sur commande d'au moins une vanne de régulation, à ladite sortie d'air de ladite deuxième turbine et une sortie d'air adaptée pour pouvoir être reliée fluidiquement par ledit réseau de conduites, sur commande d'au moins une vanne de régulation, à ladite cabine.

Selon cette variante avantageuse, la turbomachine à cycle à air est une machine 4 roues formée d'un compresseur et de trois turbines, dont une turbine de puissance.

Avantageusement et selon cette variante, ladite troisième turbine de détente comprend au moins une deuxième entrée d'air adaptée pour pouvoir être reliée fluidiquement par ledit réseau de conduites, sur commande d'au moins une vanne de régulation, à ladite sortie d'air de récupération, de manière à ce que cet air de récupération évacué de ladite cabine puisse former une source d'énergie pneumatique d'entrainement de ladite troisième turbine.

En d'autres termes, selon cette variante, lesdites deuxième et troisième turbines de détente comprennent chacune au moins une deuxième entrée d'air adaptée pour pouvoir être reliée fluidiquement par ledit réseau de conduites, sur commande d'au moins une vanne de régulation, à ladite sortie d'air de récupération de manière à ce que cet air de récupération évacué de ladite cabine puisse former une source d'énergie pneumatique d'entrainement desdites deuxième et troisième turbines. Les deuxième et troisième turbines participent ainsi à l'entrainement du compresseur en utilisant l'air de récupération comme une source d'énergie pneumatique additionnelle.

Dans le cas où le système comprend deux turbines de détente en plus de la turbine de puissance, ledit intercooler comprend avantageusement un circuit primaire adapté pour pouvoir être relié fluidiquement par ledit réseau de conduites, sur commande d'au moins une vanne de régulation d'une part à ladite sortie d'air de récupération de ladite cabine et d'autre part auxdites deuxièmes entrées desdites deuxième et troisième turbines de détente, en interaction thermique avec un circuit secondaire adapté pour pouvoir être relié fluidiquement par ledit réseau de conduites d'une part à ladite sortie d'air dudit compresseur et d'autre part audit échangeur primaire de refroidissement ou audit réseau de conduites, en aval dudit échangeur principal de refroidissement.

Selon cette variante avantageuse, l'apport de puissance froide en amont de la passe froide de l'échangeur primaire par la turbine de puissance permet (selon les conditions d'utilisation du véhicule, c'est-à-dire en vol pour un aéronef) de réduire le débit ram air nécessaire au refroidissement du pack et par voie de conséquence la trainée du véhicule de transport . En outre, l'air cabine, rejeté par le système de pressurisation, est favorablement dirigé au travers de l'intercooler afin de refroidir la sortie du compresseur (récupération thermique de l'énergie cabine). Cet air réchauffé est ensuite détendu jusqu'à la pression extérieure au travers des deuxième et troisième turbines, l'énergie mécanique produite contribuant favorablement à la motorisation de la turbomachine à cycle à air (récupération de l'énergie pneumatique de la cabine). L'air froid issu des turbines est favorablement injecté sur la passe froide du MHX afin de contribuer à son refroidissement et réduire le besoin en ram air (et donc la trainée de l'avion dans le cas où le système équipe un aéronef).

L'invention concerne également un aéronef comprenant une cabine, caractérisé en ce qu'il comprend en outre un système de conditionnement d'air selon l'invention alimentant en air conditionné ladite cabine de l'aéronef.

Les avantages et effets techniques d'un système de conditionnement d'air selon l'invention s'appliquent *mutatis mutandis* à un aéronef, selon l'invention.

L'invention concerne également un procédé de conditionnement d'air d'une cabine d'un véhicule de transport aérien ou ferroviaire, tel que revendiqué à la revendication 11 et comprenant une source d'air chaud et pressurisé, dite source d'air bleed, une source d'air frais extérieure, un canal de circulation d'un air dynamique prélevé à l'extérieur de l'aéronef, un échangeur de refroidissement, dit échangeur primaire (PHX), logé dans ledit canal de circulation d'air dynamique et comprenant un circuit primaire en interaction thermique avec un circuit secondaire alimenté par l'air dynamique, un échangeur de refroidissement, dit échangeur principal (MHX), logé dans ledit canal de circulation d'air dynamique et comprenant un circuit primaire en interaction thermique avec un circuit secondaire alimenté par l'air dynamique, une turbomachine à cycle à air comprenant au moins un compresseur et une turbine de puissance reliés mécaniquement l'un à l'autre, et un réseau de conduites et de vannes de régulation.

Un procédé selon l'invention comprend les étapes suivantes :
- l'air bleed est véhiculé vers ladite turbine de puissance pour permettre l'entrainement dudit compresseur par ladite turbine de puissance,
- l'air frais extérieur alimente ledit compresseur pour être comprimé par ce dernier,
- l'air comprimé par ledit compresseur est véhiculé par ledit réseau de conduites vers ledit échangeur primaire de refroidissement, puis vers ladite cabine après passage au moins par une boucle d'extraction d'eau si les conditions d'utilisation du véhicule l'exigent,
- l'air issu du circuit primaire dudit échangeur primaire de refroidissement alimente, en fonction des conditions de vol, soit le circuit primaire de l'échangeur principal de refroidissement, soit le réseau de conduites, en aval dudit échangeur principal de refroidissement,
- l'air bleed détendu par ladite turbine de puissance est véhiculé, en fonction des conditions d'utilisation, soit vers le canal de circulation d'air dynamique en amont de l'échangeur primaire de refroidissement et en aval dudit échangeur principal de refroidissement de manière à former une source d'énergie thermique dudit air dynamique alimentant le circuit primaire de l'échangeur primaire, soit vers un collecteur de mélange avec l'air issu dudit compresseur.

Les avantages et effets techniques d'un système de conditionnement d'air selon l'invention s'appliquent *mutatis mutandis* à un procédé de conditionnement d'air selon l'invention.

Un procédé selon l'invention est avantageusement mis en œuvre par un système de conditionnement d'air selon l'invention et un système de conditionnement d'air selon l'invention met avantageusement en œuvre un procédé selon l'invention.

Avantageusement et selon l'invention, le procédé comprend en outre une étape consistant à véhiculer un air évacué de la cabine, dit air de récupération, vers une entrée d'au moins une turbine reliée mécaniquement audit compresseur et à ladite turbine de puissance de manière à former une source d'énergie pneumatique d'entrainement de la turbomachine à cycle à air.

### Liste des figures

D'autres buts, caractéristiques et avantages de l'invention apparaîtront à la lecture de la description suivante donnée à titre uniquement non limitatif et qui se réfère aux figures annexées dans lesquelles :
[Fig. 1] est une vue schématique d'un système de conditionnement d'air selon un mode de réalisation de l'invention,
[Fig. 2] est une vue schématique d'un procédé de conditionnement d'air d'une cabine d'un aéronef selon un mode de réalisation selon l'invention,
[Fig. 3] est une vue schématique en perspective d'un aéronef selon un mode de réalisation selon l'invention.

### Description détaillée d'un mode de réalisation de l'invention

Sur les figures, les échelles et les proportions ne sont pas strictement respectées et ce, à des fins d'illustration et de clarté. En outre, les éléments identiques, similaires ou analogues sont désignés par les mêmes références dans toutes les figures.

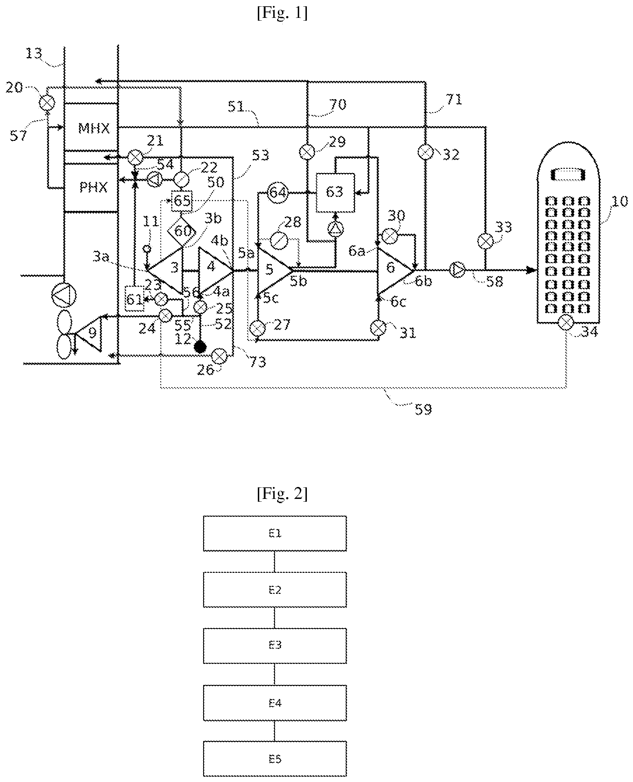

La figure 1 décrit un système de conditionnement d'air d'une cabine 10 d'un aéronef comprenant une source 11 d'air frais, une source d'air chaud pressurisé, dit source d'air bleed 12, un canal 13 de circulation d'un air dynamique prélevé à l'extérieur de l'aéronef, et un réseau de conduites et vannes de régulation 20, 21, 22, 23, 24, 25, 26, 27, 28, 29, 30, 31, 32, 33, 34 configurées pour pouvoir réguler le débit d'air circulant à travers les conduites en fonction des conditions de vol de l'aéronef.

La source d'air bleed 12 est par exemple un air prélevé sur un moteur propulsif de l'aéronef.

Le système de conditionnement d'air selon l'invention comprend également une turbomachine à cycle à air comprenant un compresseur 3, une turbine de puissance 4, une deuxième turbine 5 et une troisième turbine 6, reliés mécaniquement les uns aux autres par un arbre mécanique.

Le système comprend en outre un échangeur primaire de refroidissement PHX et un échangeur principal de refroidissement MHX logés dans le canal 13 de circulation d'un air dynamique.

Le compresseur 3 comprend une entrée d'air 3a reliée fluidiquement à la source d'air frais 11 et une sortie d'air 3b reliée fluidiquement à un échangeur thermique PHX par une conduite 50 du réseau de conduites. Cette conduite 50 est équipée d'une vanne de régulation 22 permettant de contrôler le débit d'air alimentant l'échangeur PHX. Cette conduite est également équipée selon le mode de réalisation de la figure 1 d'un convertisseur d'ozone 60.

En fonction du contrôle de la vanne de régulation 22, l'air issu du compresseur alimente soit le circuit primaire de l'échangeur PHX, soit rejoint une conduite 51 qui relie fluidiquement l'échangeur principal de refroidissement MHX et la cabine 10 (éventuellement après passage par une boucle d'extraction d'eau décrite ultérieurement). Cette conduite 51 est équipée d'une vanne d'altitude 33 de sorte qu'en vol, au-delà d'une altitude prédéterminée, l'air issu de l'échangeur MHX puisse être directement injecté dans la cabine 10.

La turbine de puissance 4, reliée mécaniquement au compresseur 3, comprend une entrée d'air 4a reliée fluidiquement à la source d'air bleed 12 par l'intermédiaire d'une conduite 52 équipée de la vanne de régulation 25. La turbine de puissance comprend également une sortie d'air 4b reliée fluidiquement au canal 13 par une conduite 53 qui débouche dans le canal entre les échangeurs PHX et MHX. Cette conduite 53 est équipée de la vanne de régulation 21. Cette vanne de régulation 21 permet de moduler la quantité d'air bleed détendu mélangé à l'air comprimé issu du compresseur 3. En effet, en cas d'ouverture partielle de cette vanne de régulation 21, une partie de l'air bleed détendu par la turbine 4 est dirigée par la conduite 54 pour être mélangée avec l'air issu de la conduite 50.

En amont de la vanne de régulation 25, le système comprend en outre une conduite 55 équipée d'une vanne de régulation 24 qui permet d'alimenter un turboventilateur 9 logé dans le canal 12. Ce turboventilateur a pour fonction d'assurer le déplacement d'air dynamique dans le canal 13.

Cette conduite 55 comprend en outre une dérivation vers une conduite 56 équipée de la vanne de régulation 23 pour pouvoir alimenter directement l'échangeur PHX et ainsi contourner la turbomachine et alimenter, en cas d'urgence, la cabine en air bleed refroidi par les échangeurs PHX et MHX. Cette conduite 56 est en outre équipée d'un convertisseur d'ozone 61.

La sortie de la turbine de puissance peut également être reliée fluidiquement au canal 13 en aval des échangeurs MHX et PHX par la conduite 73 équipée de la vanne de régulation 26.

Le système comprend également une conduite 57 équipée de la vanne de régulation 20 qui permet de relier fluidiquement la sortie de l'échangeur PHX et la sortie d'échangeur MHX en cas d'ouverture de la vanne de régulation 20. Cette caractéristique permet qu'en mode chauffage, l'air issu du compresseur se réchauffe au travers du PHX (la passe froide de l'échangeur étant alimentée par l'air chaud issu de la turbine de puissance 3), court-circuite l'échangeur MHX (pour ne pas être refroidi par cet échangeur) par la conduite 57 pour pouvoir ensuite alimenter directement la cabine (par ouverture de la vanne d'altitude 33).

En cas de fermeture de la vanne de régulation 20, ce qui correspond à un mode de refroidissement, l'air issu du circuit primaire de l'échangeur PHX est dirigé vers le circuit primaire de l'échangeur MHX pour y subir un refroidissement, puis se dirige vers la cabine, après passage par une boucle d'extraction d'eau et les turbines de détente 5 et 6.

La boucle d'extraction d'eau est formée d'un condenseur 63 et d'un séparateur d'eau 64. Le fonctionnement d'une telle boucle d'extraction d'eau est connu et n'est pas détaillé ici en détail. L'air asséché par la boucle d'extraction d'eau est détendu par la turbine 5 qui comprend une première entrée d'air 5a alimentée par l'air asséché issu du séparateur d'eau 64 et une sortie d'air 5b qui est reliée à l'entrée d'air 6a de la troisième turbine 6 de détente. La troisième turbine de détente comprend également une entrée d'air 6a et une sortie d'air 6b reliée fluidiquement à la cabine par une conduite 58.

Le système de conditionnement d'air comprend également un circuit de récupération d'énergie cabine comprenant une conduite 59 qui relie une sortie d'air équipée de la cabine équipée de la vanne de régulation 34 et les entrées 5c et 6c des turbines 5 et 6. Ainsi, l'air récupéré de la cabine est mis à contribution pour fournir un surplus d'énergie pneumatique destinée à entrainer la turbomachine. Ce circuit de recirculation comprend en outre un échangeur thermique 65, du type intercooler, qui assure des échanges thermiques entre l'air de récupération qui circule dans la conduite 59 et l'air comprimé issu du compresseur 3 qui circule dans la conduite 50.

Le système comprend également des conduites 70, 71 équipées chacune d'une vanne de régulation 29, 32 qui permettent de relier fluidiquement la sortie des turbines 5, 6 et le canal 13 de recirculation d'air dynamique. Ainsi, l'air détendu par les turbines 5 et 6 peut être favorablement injecté sur la passe froide des échangeurs MHX et PHX afin de participer au refroidissement de l'air, ce qui contribue à réduire le besoin en air dynamique, et par conséquent à réduire la trainée de l'aéronef.

Un système de conditionnement d'air selon l'invention permet ainsi, par la commande des vannes de régulation 20, 21, 22, 23, 24, 25, 26, 27, 28, 29, 30, 31, 32, 33, 34 associées aux conduites 50, 51, 52, 53, 54, 55, 56, 57, 58, 59, 71, 72 de présenter au moins les modes de fonctionnement suivants :
- un mode de fonctionnement, dit mode de routine, dans lequel ladite entrée de ladite turbine de puissance 4a est alimentée par ladite source d'air bleed 12 pour pouvoir entrainer en rotation ledit compresseur 3 alimenté par la source d'air frais 11, et ladite sortie d'air 4b de ladite turbine de puissance 4 alimente ledit canal 12 d'air dynamique par un air bleed détendu. Dans ce mode de fonctionnement, l'air comprimé par le compresseur 3 est soit directement injecté en cabine 10 en empruntant la conduite 57 (cas où le système est en mode chauffage), soit refroidi par l'échangeur MHX, puis dirigé vers la boucle d'extraction d'eau et les turbines 5 et 6 avant d'être injecté dans la cabine 10 (cas où le système est en mode de refroidissement).
- un mode de fonctionnement, dit mode de secours, dans lequel ladite entrée 4a de ladite turbine de puissance 4 est alimentée par ladite source d'air bleed 12 et l'air bleed détendu par ladite turbine de puissance 4 est refroidi par les échangeurs MHX et PHX pour alimenter ensuite directement ladite cabine 10 sans passer par la turbomachine à cycle à air.
- un mode de fonctionnement, dit mode intermédiaire, dans lequel ladite entrée 4a de ladite turbine de puissance est alimentée par ladite source d'air bleed 12 pour pouvoir entrainer en rotation ledit compresseur 3 alimenté par un air frais 11 prélevé à l'extérieur de l'aéronef, et ledit air compressé par ledit compresseur 3 est mélangé avec l'air bleed détendu par ladite turbine de puissance 4 en amont du circuit primaire de l'échangeur primaire de refroidissement. Cet air mélangé est ensuite soit directement injecté dans la cabine, soit asséché après passage par la boucle d'extraction d'eau et les turbines de détente.

Il convient de noter que d'autres modes de fonctionnement sont possibles par la commande des différentes vannes de régulation. Ces vannes de régulation sont de préférence pilotées par une unité de commande en fonction des conditions de vol (altitude, température extérieure, état du vol - sol, montée, descente, vol de croisière - etc.) de l'aéronef.

La figure 2 illustre schématiquement un procédé de conditionnement d'air d'une cabine 10 d'un aéronef comprenant une source d'air bleed 12, une source d'air frais extérieur 11, un canal 13 de circulation d'un air dynamique prélevé à l'extérieur de l'aéronef, un échangeur primaire de refroidissement PHX, logé dans ledit canal 13 de circulation d'air dynamique, un échangeur principal de refroidissement MHX, logé dans ledit canal 13 de circulation d'air dynamique, une turbomachine à cycle à air comprenant au moins un compresseur 3, une turbine de puissance 4, une deuxième turbine 5 et une troisième turbine 6 reliés mécaniquement les uns aux autres par un arbre mécanique, et un réseau de conduites et de vannes de régulation comprenant les étapes suivantes :
- une étape E1 dans laquelle l'air bleed est véhiculé vers ladite turbine de puissance pour permettre l'entrainement dudit compresseur par ladite turbine de puissance,
- une étape E2 dans laquelle l'air frais extérieur alimente ledit compresseur pour être comprimé par ce dernier,
- une étape E3 dans laquelle l'air comprimé par ledit compresseur est véhiculé par ledit réseau de conduites vers ledit échangeur primaire de refroidissement PHX, puis vers ladite cabine après passage au moins par une boucle d'extraction d'eau si les conditions de vol l'exigent,
- une étape E4 dans laquelle l'air bleed détendu par ladite turbine de puissance est véhiculé, en fonction des conditions de vol, soit vers le canal de circulation d'air dynamique en amont de l'échangeur primaire de refroidissement, soit vers un collecteur de mélange avec l'air issu dudit compresseur, soit directement vers ladite cabine en contournant ledit échangeur principal de refroidissement.
- une étape E5 dans laquelle l'air évacué de la cabine, dit air de récupération, est dirigé vers une entrée d'au moins une turbine reliée mécaniquement audit compresseur et à ladite turbine de puissance de manière à former une source d'énergie pneumatique d'entrainement de la turbomachine à cycle à air.

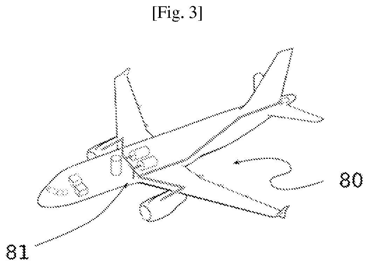

La figure 3 illustre schématiquement un aéronef 80 équipé d'un système de conditionnement d'air 81 selon l'invention.

L'invention pourrait également s'appliquer à un système de conditionnement d'air d'un véhicule de transport ferroviaire, auquel cas les conditions d'ouverture/fermeture des vannes de régulation (et notamment de la vanne d'altitude) doivent être adaptées aux conditions de fonctionnement du véhicule de transport ferroviaire.

## Revendications

1. Système de conditionnement d'air d'une cabine (10) d'un véhicule (80) de transport aérien ou ferroviaire comprenant :
- une source d'air chaud et pressurisé, dite source d'air bleed (12),
- un canal (13) de circulation d'un air dynamique prélevé à l'extérieur du véhicule de transport,
- un réseau de conduites (50, 51, 52, 53, 54, 55, 56, 57, 58, 59, 70, 71) et vannes de régulation (20, 21, 22, 23, 24, 25, 26, 27, 28, 29, 30, 31, 32, 33, 34) configurées pour pouvoir réguler le débit d'air circulant à travers lesdites conduites en fonction de conditions d'utilisation du véhicule de transport,
- une turbomachine à cycle à air comprenant au moins un compresseur (3) et une turbine, dite turbine de puissance (4), reliés mécaniquement l'un à l'autre, ledit compresseur (3) comprenant une entrée d'air (3a) reliée fluidiquement à une bouche de prélèvement d'air extérieur (11) et une sortie d'air (3b) adaptée pour pouvoir être reliée fluidiquement par ledit réseau de conduites, sur commande d'au moins une vanne de régulation (22), à ladite cabine (10) pour pouvoir l'alimenter en air à pression et température contrôlées, et ladite turbine de puissance (4) comprenant une entrée d'air (4a) adaptée pour pouvoir être reliée fluidiquement par ledit réseau de conduites, sur commande d'au moins une vanne de régulation (25), à ladite source d'air bleed (12) et une sortie d'air (4b),
- au moins un échangeur de chaleur, dit échangeur primaire de refroidissement (PHX), logé dans ledit canal (13) de circulation d'air dynamique et comprenant un circuit primaire alimenté par le flux d'air issu dudit compresseur (3) en interaction thermique avec un circuit secondaire alimenté par ledit air dynamique,
le système étant **caractérisé par** :
- au moins un deuxième échangeur de chaleur, dit échangeur principal de refroidissement (MHX), agencé dans ledit canal (13) de circulation d'air dynamique, et comprenant un circuit primaire alimenté par ledit flux d'air issu dudit circuit primaire dudit échangeur primaire (PHX) en interaction thermique avec un circuit secondaire alimenté par ledit air dynamique, et par ledit réseau de conduites comprenant en outre :
- une conduite, dite conduite de puissance thermique (53), adaptée pour pouvoir relier fluidiquement, sur commande d'au moins une vanne de régulation (25, 21), ladite sortie d'air (4b) de ladite turbine de puissance (4) et ledit canal (13) de circulation d'air dynamique en amont dudit échangeur primaire (PHX) et en aval dudit échangeur principal (MHX) de manière à ce que ledit air bleed détendu par ladite turbine de puissance (4) puisse former une source d'énergie thermique dudit air dynamique alimentant ledit circuit primaire dudit échangeur primaire (PHX),
- une conduite de dérivation (57) adaptée pour pouvoir relier fluidiquement, sur commande d'au moins une vanne de régulation (20), la sortie du circuit primaire dudit échangeur primaire (PHX) de refroidissement et le réseau de conduites, en aval dudit échangeur principal de refroidissement (MHX), de manière à contourner ledit échangeur principal de refroidissement.

2. Système de conditionnement d'air selon la revendication 1, **caractérisé en ce que** lesdites vannes de régulation (20, 21, 22, 23, 24, 25, 26, 27, 28, 29, 30, 31, 32, 33, 34) sont pilotées pour permettre au moins les modes de fonctionnement suivants :
- un mode de fonctionnement, dit mode de routine, dans lequel ladite entrée (4a) de ladite turbine de puissance (4) est alimentée par ladite source d'air bleed (12) pour pouvoir entrainer en rotation ledit compresseur (3) alimenté par un air prélevé à l'extérieur (11) du véhicule de transport, et ladite sortie d'air (4b) de ladite turbine de puissance (4) alimente ledit canal (13) d'air dynamique par un air bleed détendu,
- un mode de fonctionnement, dit mode de secours, dans lequel ladite source d'air bleed (12) alimente directement ladite cabine (12) après refroidissement par lesdits échangeurs (MHX, PHX) de chaleur logés dans le canal (13) de circulation d'air dynamique, sans passer par la turbomachine à cycle à air,
- un mode de fonctionnement, dit mode intermédiaire, dans lequel ladite entrée (4a) de ladite turbine de puissance (4) est alimentée par ladite source d'air bleed (12) pour pouvoir entrainer en rotation ledit compresseur (3) alimenté par un air prélevé à l'extérieur (11) du véhicule de transport, et ledit air compressé par ledit compresseur (3) est mélangé avec l'air bleed détendu par ladite turbine de puissance (4) en amont du circuit primaire de l'échangeur primaire de refroidissement (PHX) ou avec l'air bleed issu directement de ladite source d'air bleed (12).

3. Système de conditionnement d'air selon l'une des revendications 1 ou 2, **caractérisé en ce qu'**il comprend en outre un turboventilateur (9) agencé dans ledit canal (13) de circulation d'air dynamique en aval dudit échangeur primaire (PHX) et adapté pouvoir être relié par ledit réseau de conduites, sur commande d'au moins une vanne de régulation (24), à ladite source d'air bleed (12).

4. Système de conditionnement d'air selon l'une des revendications 1 à 3, **caractérisé en ce que** ladite turbomachine à cycle à air comprend en outre :
- au moins une deuxième turbine (5) reliée mécaniquement audit compresseur (3) et à ladite turbine de puissance (4), ladite deuxième turbine de détente (5) comprenant au moins une première entrée d'air (5a) adaptée pour pouvoir être reliée fluidiquement par ledit réseau de conduites, sur commande d'au moins une vanne de régulation (32) , audit échangeur principal de refroidissement (MHx) et une sortie d'air (5b) adaptée pour pouvoir être reliée fluidiquement par ledit réseau de conduites, sur commande d'au moins une vanne de régulation (29), à ladite cabine (10),
- une boucle d'extraction d'eau (63, 64) agencée entre ledit échangeur principal de refroidissement (MHX) et ladite deuxième turbine (5), de manière à pouvoir extraire l'eau présente dans l'air délivré par ledit échangeur de refroidissement principal avant d'être délivré à cette deuxième turbine de détente.

5. Système de conditionnement d'air selon la revendication 4, **caractérisé en ce que** ladite deuxième turbine de détente (5) comprend au moins une deuxième entrée (5c) d'air adaptée pour pouvoir être reliée fluidiquement par ledit réseau de conduites, sur commande d'au moins une vanne de régulation (27), à une sortie d'air de ladite cabine, dite sortie d'air de récupération, de manière à ce que cet air de récupération évacué de ladite cabine (10) puisse former une source d'énergie pneumatique d'entrainement de ladite deuxième turbine (5).

6. Système de conditionnement d'air selon la revendication 5, **caractérisé en ce qu'**il comprend en outre au moins un échangeur thermique, dit intercooler (65), comprenant un circuit primaire adapté pour pouvoir être relié fluidiquement par ledit réseau de conduites, sur commande d'au moins une vanne de régulation (34) d'une part à ladite sortie d'air de récupération de ladite cabine et d'autre part à ladite deuxième entrée (5c) de ladite deuxième turbine de détente (5), en interaction thermique avec un circuit secondaire adapté pour pouvoir être relié fluidiquement par ledit réseau de conduites d'une part à ladite sortie d'air dudit compresseur (3) et d'autre part audit échangeur primaire de refroidissement (PHX) ou audit réseau de conduites, en aval dudit échangeur principal de refroidissement (MHX).

7. Système de conditionnement d'air selon l'une des revendications 4 à 6, **caractérisé en ce que** ladite turbomachine à cycle à air comprend en outre au moins une troisième turbine (6) reliée mécaniquement audit compresseur (3), à ladite turbine de puissance (4) et à ladite deuxième turbine de détente (5), ladite troisième turbine (6) comprenant une première entrée d'air (6a) adaptée pour pouvoir être reliée fluidiquement par ledit réseau de conduites, sur commande d'au moins une vanne de régulation (29, 28, 30), à ladite sortie d'air (5b) de ladite deuxième turbine (5) et une sortie d'air (6b) adaptée pour pouvoir être reliée fluidiquement par ledit réseau de conduites, sur commande d'au moins une vanne de régulation (32), à ladite cabine (10).

8. Système de conditionnement d'air selon la revendication 7, **caractérisé en ce que** ladite troisième turbine de détente (6) comprend au moins une deuxième entrée (6c) d'air adaptée pour pouvoir être reliée fluidiquement par ledit réseau de conduites, sur commande d'au moins une vanne de régulation (31), à ladite sortie d'air de récupération, de manière à ce que cet air de récupération évacué de ladite cabine (10) puisse former une source d'énergie pneumatique d'entrainement de ladite troisième turbine (6).

9. Système de conditionnement d'air selon les revendications 6 et 8 prises ensemble, **caractérisé en ce que** ledit intercooler (65) comprend un circuit primaire adapté pour pouvoir être relié fluidiquement par ledit réseau de conduites, sur commande d'au moins une vanne de régulation (34) d'une part à ladite sortie d'air de récupération de ladite cabine et d'autre part auxdites deuxièmes entrées (5c, 6c) desdites deuxième et troisième turbines de détente (5, 6), en interaction thermique avec un circuit secondaire adapté pour pouvoir être relié fluidiquement par ledit réseau de conduites d'une part à ladite sortie d'air dudit compresseur (3) et d'autre part audit échangeur primaire de refroidissement (PHX) ou audit réseau de conduites, en aval dudit échangeur principal de refroidissement (MHX).

10. Aéronef comprenant une cabine, **caractérisé en ce qu'**il comprend en outre un système de conditionnement (81) d'air selon l'une des revendications 1 à 9 alimentant en air conditionné ladite cabine (10) de l'aéronef (80).

11. Procédé de conditionnement d'air d'une cabine (10) d'un aéronef comprenant une
source d'air chaud et pressurisé, dite source d'air bleed (12), une source d'air frais extérieure (11), canal de circulation (13) d'un air dynamique prélevé à l'extérieur de l'aéronef, un échangeur de refroidissement, dit échangeur primaire (PHX), logé dans ledit canal de circulation d'air dynamique et comprenant un circuit primaire en interaction thermique avec un circuit secondaire alimenté par l'air dynamique, un échangeur de refroidissement, dit échangeur principal (MHX), logé dans ledit canal de circulation d'air dynamique et comprenant un circuit primaire en interaction thermique avec un circuit secondaire alimenté par l'air dynamique, une turbomachine à cycle à air comprenant au moins un compresseur (3) et une turbine de puissance (4) reliés mécaniquement l'un à l'autre, et
un réseau de conduites (50, 51, 52, 53, 54, 55, 56, 57, 58, 59, 70, 71) et de vannes de (20, 21, 22, 23, 24, 25, 26, 27, 28, 29, 30, 31, 32, 33, 34), le procédé comprenant les étapes :
- (E1) l'air bleed est véhiculé vers ladite turbine de puissance pour permettre l'entrainement dudit compresseur par ladite turbine de puissance,
- (E2) l'air frais extérieur alimente ledit compresseur pour être comprimé par ce dernier,
- (E3) l'air comprimé par ledit compresseur est véhiculé par ledit réseau de conduites vers ledit circuit primaire dudit échangeur primaire de refroidissement (PHx), puis vers ladite cabine après passage au moins par une boucle d'extraction d'eau (63, 64) si les conditions de vol l'exigent,
**caractérisé en ce que** le procédé comprend les étapes suivantes :
- l'air issu du circuit primaire dudit échangeur primaire (PHx) de refroidissement alimente, en fonction des conditions de vol, soit le circuit primaire de l'échangeur principal de refroidissement (MHx), soit le réseau de conduites, en aval dudit échangeur principal de refroidissement (MHx),
- (E4) l'air bleed détendu par ladite turbine de puissance est véhiculé, en fonction des conditions de vol, soit vers le canal de circulation d'air dynamique en amont de l'échangeur primaire de refroidissement (PHx) et en aval dudit échangeur principal (MHx) de refroidissement de manière à former une source d'énergie thermique dudit air dynamique alimentant le circuit primaire de l'échangeur primaire (PHx), soit vers un collecteur de mélange avec l'air issu dudit compresseur..

12. Procédé de conditionnement d'air d'une cabine d'un aéronef selon la revendication 11, **caractérisé en ce qu'**il comprend en outre une étape (E5) consistant à véhiculer un air évacué de la cabine, dit air de récupération, vers une entrée d'au moins une turbine reliée mécaniquement audit compresseur et à ladite turbine de puissance de manière à former une source d'énergie pneumatique d'entrainement de la turbomachine à cycle à air.

## Patentansprüche

1. System zur Klimatisierung einer Kabine (10) eines Luft- oder Schienenfahrzeugs (80) mit:
- einer Quelle für warme und unter Druck stehende Luft, die als Zapfluftquelle (12) bezeichnet wird,
- einem Kanal (13) für die dynamischen Zirkulation einer Luft, die außerhalb des Transportfahrzeugs entnommen wird,
- einem Leitungsnetz (50, 51, 52, 53, 54, 55, 56, 57, 58 , 59, 70, 71) und
- Regelventilen (20, 21, 22, 23, 24, 25, 26, 27, 28, 29, 30, 31, 32, 33, 34), die ausgestaltet sind, den Luftstrom durch die Leitungen in Abhängigkeit von den Betriebsbedingungen des Transportfahrzeugs zu regulieren,
- einer Turbomaschine für den Luftkreislauf, mit mindestens einem Kompressor (3) und einer Turbine, der sogenannten Kraftturbine (4), die mechanisch miteinander verbunden sind, worin der Kompressor (3) einen Lufteinlass (3a), der fluidmäßig mit einer Außenluftentnahmeöffnung (11) verbunden ist, und einen Luftauslass (3b) umfasst, der angepasst ist, durch das Leitungsnetz fluidmäßig verbunden zu werden, worin die Kraftturbine (4) einen Lufteinlass (4a) umfasst, der angepasst ist, über das Leitungsnetz auf Befehl von mindestens einem Regelventil (25) mit der Zapfluftquelle (12) und einem Luftauslass (4b) fluidmäßig verbunden zu werden,
- mindestens einem Wärmetauscher, dem sogenannten Primärkühltauscher (PHX), der in dem Kanal (13) für die dynamische Luftzirkulation untergebracht und einen Primärkreislauf umfasst, der durch den Luftstrom aus dem Kompressor (3) in thermischer Wechselwirkung mit einem Sekundärkreislauf gespeist wird, der durch die dynamische Luft gespeist wird,
worin das System **gekennzeichnet ist durch**:
- mindestens einen zweiten Wärmetauscher, dem sogenannten Hauptkühltauscher (MHX), der in dem Kanal (13) für die dynamische Luftzirkulation angeordnet ist und einen Primärkreislauf umfasst, der **durch** den Luftstrom aus dem Primärkreislauf des Primärkühltauschers (PHX) in thermischer Wechselwirkung mit einem Sekundärkreislauf gespeist wird, der **durch** die dynamische Luft gespeist wird,
und **durch** das Leitungsnetz, das zudem umfasst:
- eine Leitung, die sogenannte Wärmeleistungsleitung (53), die angepasst ist, auf Befehl von mindestens einem Regelventil (25, 21), den Luftauslass (4b) der Kraftturbine (4) und den Kanal (13) für die dynamische Luftzirkulation stromaufwärts des Primärkühltauschers (PHX) und stromabwärts des Hauptkühltauschers (MHX) fluidmäßig zu verbinden, so dass die von der Kraftturbine (4) entspannte Zapfluft eine Quelle für die thermische Energie der dynamischen Luft bilden kann, die den Primärkreislauf des Primärkühltauschers (PHX) speist, und
- eine Abzweigleitung (57), die angepasst ist, auf Befehl von mindestens einem Regelventil (20) den Ausgang des Primärkreislaufs des Primärkühltauschers (PHX) und das Leitungsnetz stromabwärts des Hauptkühltauschers (MHX) fluidmäßig zu verbinden, um den Hauptkühltauschers zu umgehen.

2. Klimaanlage nach Anspruch 1, **dadurch gekennzeichnet, dass** die Regelventile (20, 21, 22, 23, 24, 25, 26, 27, 28, 29, 30, 31, 32, 33, 34) so gesteuert werden, um mindestens die folgenden Betriebsarten zu ermöglichen:
- einen Betriebsmodus, der als Routinemodus bezeichnet wird, in dem der Einlass ( 4a) der Kraftturbine (4) von der Zapfluftquelle (12) gespeist wird, um den Kompressor (3), der mit von der Außenseite (11) des Transportfahrzeugs abgezogener Luft versorgt wird, in Drehung zu versetzen, und der Luftauslass (4b) der Kraftturbine (4) den Kanal für die dynamische Luftzirkulation (13) mit entspannter Abluft versorgt,
- eine Betriebsart, die als Notbetrieb bezeichnet wird, in der die Zapfluftquelle (12) die Kabine (12) nach der Kühlung durch die Wärmetauscher (MHX, PHX), die in dem Kanal (13) für die dynamische Luftzirkulation untergebracht sind, direkt versorgt, ohne die Turbomaschine für den Luftkreislauf zu durchlaufen,
- eine Betriebsart, die als Zwischenbetrieb bezeichnet wird, in dem der Einlass (4a) der Kraftturbine (4) von der Zapfluftquelle (12) gespeist wird, um den Kompressor (3), der mit von der Außenseite (11) des Transportfahrzeugs entnommener Luft gespeist wird, in Drehung zu versetzen, und die von dem Kompressor (3) komprimierte Luft mit Zapfluft, die von der Kraftturbine (4) stromaufwärts des Primärkreislaufs des Primärkühltauschers (PHX) oder mit Zapfluft gemischt wird, die direkt von der Zapfluftquelle (12) kommt, entspannt wird.

3. Klimaanlage nach einem der Ansprüche 1 oder 2, **dadurch gekennzeichnet, dass** diese zudem einen Turboventilator (9) umfasst, der in dem Kanal für die dynamische Luftzirkulation (13) stromabwärts des Primärkühltauschers (PHX) angeordnet ist und angepasst ist, auf Befehl von mindestens einem Regelventil (24) durch das Leitungsnetz mit der Zapfluftquelle (12) verbunden zu werden.

4. Klimaanlage nach einem der Ansprüche 1 bis 3, **dadurch gekennzeichnet, dass** die Turbomaschine mit Luftkreislauf zudem umfasst:
- mindestens eine zweite Turbine (5), die mechanisch mit dem Kompressor (3) und der Kraftturbine (4) verbunden ist, worin die zweite Turbine (5) zur Entspannung mindestens einen ersten Lufteinlass (5a), der angepasst ist, auf Befehl von mindestens einem Regelventil (32) durch das Leitungsnetz mit dem Hauptkühltauscher (MHX) fluidmäßig verbunden zu werden, und einen Luftauslass (5b) umfasst, der angepasst ist, auf Befehl von mindestens einem Regelventil (29) durch das Leitungsnetz mit der Kabine (10) fluidmäßig verbunden zu werden, und
- eine Wasserextraktionsschleife (63, 64), die zwischen dem Hauptkühltauscher (MHX) und der zweiten Turbine (5) angeordnet ist, um das Wasser in der Luft zu extrahieren, die von dem Hauptkühltauscher abgegeben wird, bevor sie zu dieser zweiten Entspannungsturbine abgegeben wird.

5. Klimaanlage nach Anspruch 4, **dadurch gekennzeichnet, dass** die zweite Turbine (5) zur Entspannung mindestens einen zweiten Lufteinlass (5c) umfasst, der angepasst ist, auf Befehl von mindestens einem Regelventil (27) durch das Leitungsnetz mit einem Luftauslass der Kabine, dem sogenannten Sammelluftauslass, so fluidmäßig verbunden zu werden, dass die aus der Kabine (10) ausgestoßene Sammelluft eine pneumatische Energiequelle für den Antrieb der zweiten Turbine (5) bilden kann.

6. Klimaanlage nach Anspruch 5, **dadurch gekennzeichnet, dass** diese zudem mindestens einen Wärmetauscher, genannt Zwischenkühler (65), umfasst, der einen Primärkreislauf umfasst, der angepasst ist, auf Befehl von mindestens einem Regelventil (34) durch das Leitungsnetz einerseits mit dem Sammelluftauslass der Kabine und andererseits mit dem zweiten Einlass (5c) der zweiten Entspannungsturbine (5), in thermischer Wechselwirkung mit einem Sekundärkreislauf fluidmäßig verbunden zu werden, der angepasst ist, über das Leitungsnetz einerseits mit dem Luftauslass des Kompressors (3) und andererseits mit dem Primärkühltauscher (PHX) oder dem Leitungsnetz stromabwärts des Hauptkühltauschers (MHX) fluidmäßig verbunden zu werden.

7. Klimaanlage nach einem der Ansprüche 4 bis 6, **dadurch gekennzeichnet, dass** die Turbomaschine für den Luftkreislauf zudem mindestens eine dritte Turbine (6) umfasst, die mechanisch mit dem Kompressor (3), der Kraftturbine (4) und der zweiten Turbine zur Entspannung (5) verbunden ist, worin die dritte Turbine (6) einen ersten Lufteinlass (6a), der angepasst ist, auf Befehl von mindestens einem Regelventil (29, 28, 30) durch das Leitungsnetz mit dem Luftauslass (5b) der zweiten Turbine (5) fluidmäßig verbunden zu werden, und einen Luftauslass (6b) umfasst, der angepasst ist, auf Befehl von mindestens einem Regelventil (32) durch das Leitungsnetz mit der Kabine (10) fluidmäßig verbunden zu kann.

8. Klimaanlage nach Anspruch 7, **dadurch gekennzeichnet, dass** die dritte Turbine zur Entspannung (6) mindestens einen zweiten Lufteinlass (6c) umfasst, der angepasst ist, auf Befehl von mindestens einem Regelventil (31) über das Leitungsnetz mit dem Sammelluftauslass fluidmäßig verbunden zu werden, so dass die aus der Kabine (10) ausgestoßene Sammelluft eine pneumatische Energiequelle für den Antrieb der dritten Turbine (6) bilden kann.

9. Klimaanlage nach den Ansprüchen 6 und 8 zusammengenommen, **dadurch gekennzeichnet, dass** der Zwischenkühler (65) einen Primärkreislauf umfasst, der angepasst ist, auf Befehl von mindestens einem Regelventil (34) durch das Leitungsnetz einerseits mit dem Sammelluftauslass der Kabine und andererseits mit den zweiten Einlässen (5c, 6c) der zweiten und dritten Entspannungsturbinen (5, 6) in thermischer Wechselwirkung mit einem Sekundärkreislauf verbunden zu werden, der angepasst ist, durch das Leitungsnetz einerseits mit dem Luftauslass des Kompressors (3) und andererseits mit dem Primärkühltauscher (PHX) oder dem Leitungsnetz stromabwärts des Hauptkühltauschers (MHX) fluidmäßig verbunden zu werden.

10. Flugzeug mit einer Kabine, **dadurch gekennzeichnet, dass** dieses zudem eine Klimaanlage (81) nach einem der Ansprüche 1 bis 9 umfasst, die die Kabine (10) des Flugzeugs (80) mit klimatisierter Luft versorgt.

11. Verfahren zur Klimatisierung einer Kabine (10) eines Flugzeugs, umfassend eine Quelle für warme, unter Druck stehende Luft, genannt Zapfluftquelle (12), eine Außenfrischluftquelle (11), ein Kanal (13) für dynamische Luftzirkulation, die von der Außenseite der Flugzeugs entnommen wird, ein Kühltauscher, der sogenannte Primärkühltauscher (PHX), der in dem Kanal der dynamischen Luftzirkulation untergebracht ist und der einen Primärkreislauf in thermischer Wechselwirkung mit einem Sekundärkreislauf umfasst, der durch die dynamische Luft gespeist wird, ein Kühltauscher, der sogenannte Hauptkühltauscher (MHX), der in dem Kanal für dynamische Luftzirkulation untergebracht ist und der einen Primärkreislauf in thermischer Wechselwirkung mit einem Sekundärkreislauf umfasst, der durch die dynamische Luft gespeist wird, eine Turbomaschine für den Luftkreislauf, die mindestens einen Kompressor (3) und eine Kraftturbine (4) umfasst, die mechanisch miteinander verbunden sind, und ein Netzwerk von Leitungen (50, 51, 52, 53, 54, 55, 56, 57, 58, 59, 70, 71) und Ventilen (20, 21, 22, 23, 24, 25, 26, 27, 28, 29, 30, 31, 32, 33, 34),
wobei das Verfahren die Schritte umfasst:
- (El) transportieren von Zapfluft zu der Kraftturbine, damit der Kompressor von der Kraftturbine angetrieben werden kann,
- (E2) zuführen der frischen Außenluft zu dem Kompressor, um von diesem verdichtet zu werden,
- (E3) transportieren der von dem Kompressor komprimierten Luft durch das Leitungsnetz zu dem Primärkreislauf des Primärkühltauschers (PHX) und dann zu der Kabine, nachdem sie mindestens eine Wasserextraktionsschleife (63, 64) durchlaufen hat, wenn die Flugbedingungen dies erfordern,
**dadurch gekennzeichnet, dass** das Verfahren die Schritte umfasst:
- zuführen der Luft aus dem Primärkreislauf des Primärkühltauschers (PHX) in Abhängigkeit von den Flugbedingungen, entweder dem Primärkreislauf des Hauptkühltauschers (MHX) oder dem Leitungsnetz stromabwärts des Hauptkühltauschers (MHX),
- transportieren (E4) der von der Kraftturbine entspannten Zapfluft in Abhängigkeit von den Flugbedingungen, entweder zum Kanal für dynamische Luftzirkulation stromaufwärts des Primärkühltauschers (PHX) und stromabwärts des Hauptkühltauschers (MHX), um eine Wärmeenergiequelle für die dynamische Luft zu bilden, die den Primärkreislauf des Primärkühltauschers (PHX) versorgt, oder zu einem Sammler für die Mischung mit der Luft, die aus dem Kompressor kommt.

12. Verfahren zur Klimatisierung einer Flugzeugkabine nach Anspruch 11, **dadurch gekennzeichnet, dass** dieses zudem einen Schritt (E5) umfasst, der darin besteht, eine aus der Kabine ausgestoßene Luft, die als Sammelluft bezeichnet wird, zu einem Einlass mindestens einer Turbine zu befördern, die mechanisch mit dem Kompressor und der Kraftturbine verbunden ist, um eine pneumatische Energiequelle für den Antrieb der Turbomaschine mit Luftkreislauf zu bilden.

## Claims

1. Air conditioning system for a cabin (10) of an air or rail transport vehicle (80) comprising:
- a hot and pressurized air source, referred to as a bleed air source (12),
- a channel (13) for circulating ram air drawn from outside the transport vehicle,
- a network of pipes (50, 51, 52, 53, 54, 55, 56, 57, 58, 59; 70, 71) and control valves (20, 21, 22, 23, 24, 25, 26, 27, 28, 29, 30, 31, 32, 33, 34) which are configured to be able to control the flow of air circulating through said pipes on the basis of the conditions of use of the transport vehicle,
- an air cycle turbine engine comprising at least one compressor (3) and a turbine, referred to as a power turbine (4), which are mechanically connected to one another, said compressor (3) comprising an air inlet (3a) which is fluidically connected to an opening (11) for drawing in outside air and an air outlet (3b) which is suitable for being able to be fluidically connected by said pipe network, upon control of at least one control valve (22), to said cabin (10) in order to be able to supply it with air at a controlled pressure and temperature, and said power turbine (4) comprising an air inlet (4a) which is suitable for being able to be fluidically connected by said pipe network, upon control of at least one control valve (25), to said bleed air source (12) and an air outlet (4b),
- at least one heat exchanger, referred to as a primary cooling exchanger (PHX), which is accommodated in said ram-air circulation channel (13) and comprises a primary circuit which is supplied with the flow of air from said compressor (3) in thermal interaction with a secondary circuit supplied with said ram air, the system being **characterized by**:
- at least one second heat exchanger, referred to as the main cooling exchanger (MHX), which is arranged in said ram-air circulation channel (13), and comprising a primary circuit supplied with said flow of air from said primary circuit of said primary exchanger (PHX) in thermal interaction with a secondary circuit supplied with said ram air,
and by said pipe network comprising furthermore:
- a pipe, referred to as a thermal power pipe (53), which is suitable for being able to fluidically connect, upon control of at least one control valve (25, 21), said air outlet (4b) of said power turbine (4) and said ram-air circulation channel (13) upstream of said primary exchanger (PHX) such that said bleed air expanded by said power turbine (4) can form a thermal energy source for said ram air being supplied to said primary circuit of said primary exchanger (PHX).
- a bypass pipe (57) which is suitable for being able to fluidically connect, upon control of at least one control valve (20), the outlet of the primary circuit of said primary cooling exchanger (PHX) and the pipe network downstream of said main cooling exchanger (MHX), so as to bypass said main cooling exchanger.

2. Air conditioning system according to claim 1, **characterized in that** said control valves (20, 21, 22, 23, 24, 25, 26, 27, 28, 29, 30, 31, 32, 33, 34) are controlled in order to allow at least the following operating modes:
- an operating mode, referred to as a routine mode, in which said inlet (4a) of said power turbine (4) is supplied with said bleed air source (12) in order to be able to rotate said compressor (3) supplied with air drawn from outside (11) of the transport vehicle, and said air outlet (4b) of said power turbine (4) supplies said ram-air channel (13) with expanded bleed air,
- an operating mode, referred to as an emergency mode, in which said bleed air source (12) is supplied directly to said cabin (12) after cooling by said heat exchangers (MHX, PHX) accommodated in the ram-air circulation channel (13), without passing through the air cycle turbine engine,
- an operating mode, referred to as an intermediate mode, in which said inlet (4a) of said power turbine (4) is supplied with said bleed air source (12) in order to be able to rotate said compressor (3) supplied with air drawn from outside (11) the transport vehicle, and said air compressed by said compressor (3) is mixed with the bleed air expanded by said power turbine (4) upstream of the primary circuit of the primary cooling exchanger (PHX) or with bleed air directly from said bleed air source (12).

3. Air conditioning system according to any of claims 1 to 2, **characterized in that** it also comprises a turbofan (9) which is arranged in said ram-air circulation channel (13) downstream of said primary exchanger (PHX) and suitable for being able to be connected by said pipe network, upon control of at least one control valve (24), to said bleed air source (12).

4. Air conditioning system according to any of claims 1 to 3, **characterized in that** said air cycle turbine engine further comprises:
- at least a second turbine (5) which is mechanically connected to said compressor (3) and to said power turbine (4), said second expansion turbine (5) comprising at least a first air inlet (5a) which is suitable for being able to be fluidically connected by said pipe network, upon control of at least one control valve (32), to said main cooling exchanger (MHX) and an air outlet (5b) which is suitable for being able to be fluidically connected by said pipe network , upon control of at least one control valve (29), to said cabin (10),
- a water extraction loop (63, 64) which is arranged between said main cooling exchanger (MHX) and said second turbine (5) so as to be able to extract the water present in the air fed by said main cooling heat exchanger before being fed to this second expansion turbine.

5. Air conditioning system according to claim 4, **characterized in that** said second expansion turbine (5) comprises at least a second air inlet (5c) which is suitable for being able to be fluidically connected by said pipe network, upon control of at least one control valve (27), to an air outlet of said cabin, referred to as a recovery air outlet, such that this recovery air discharged from said cabin (10) can form a pneumatic energy source for driving said second turbine (5).

6. Air conditioning system according to claim 5, **characterized in that** it further comprises at least one heat exchanger, referred to as an intercooler (65), comprising a primary circuit which is suitable for being able to be fluidically connected by said pipe network, upon control of at least one control valve (34), to said recovery air outlet of said cabin and to said second inlet (5c) of said second expansion turbine (5), in thermal interaction with a secondary circuit which is suitable for being able to be fluidically connected by said pipe network to said air outlet of said compressor (3) and to said primary cooling exchanger (PHX) or to said pipe network downstream of said main cooling exchanger (MHX).

7. Air conditioning system according to any of claims 4 to 6, **characterized in that** said air cycle turbine engine further comprises at least one third turbine (6) which is mechanically connected to said compressor (3), to said power turbine (4) and to said second expansion turbine (5), said third turbine (6) comprising a first air inlet (6a) which is suitable for being able to be fluidically connected by said pipe network , upon control of at least one control valve (29, 28, 30), to said air outlet (5b) of said second turbine (5) and an air outlet (6b) which is suitable for being able to be fluidically connected by said pipe network , upon control of at least one control valve (32), to said cabin (10).

8. Air conditioning system according to claim 7, **characterized in that** said third expansion turbine (6) comprises at least a second air inlet (6c) which is suitable for being able to be fluidically connected by said pipe network, upon control of at least one control valve (31), to said recovery air outlet such that this recovery air discharged from said cabin (10) can form a pneumatic energy source for driving said third turbine (6).

9. Air conditioning system according to claims 6 and 8 taken together, **characterized in that** said intercooler (65) comprises a primary circuit which is suitable for being able to be fluidically connected by said pipe network, upon control of at least one control valve (34), to said recovery air outlet of said cabin and to said second inlets (5c, 6c) of said second and third expansion turbines (5, 6), in thermal interaction with a secondary circuit which is suitable for being able to be fluidically connected by said pipe network to said air outlet of said compressor (3) and to said primary cooling exchanger (PHX) or to said pipe network downstream of said main cooling exchanger (MHX).

10. Aircraft comprising a cabin, **characterized in that** it also comprises an air conditioning system (81) according to any of claims 1 to 11, said air conditioning system supplying said cabin (10) of the aircraft (80) with conditioned air.

11. Method for air conditioning a cabin (10) of an aircraft comprising a hot and pressurized air source, referred to as a bleed air source (12), a fresh outside air source (11), a channel (13) for circulating ram air drawn from outside the aircraft, a cooling exchanger, referred to as a primary exchanger (PHX), which is accommodated in said ram-air circulation channel, a cooling exchanger, referred to as a main exchanger (MHX), which is accommodated in said ram-air circulation channel and comprising a primary circuit in thermal interaction with a secondary circuit and supplied with ram air, an air cycle turbine engine comprising at least one compressor (3) and a power turbine (4) which are mechanically connected to one another, and a network of pipes (50, 51, 52, 53, 54, 55, 56, 57, 58, 59, 70, 71) and control valves (20, 21, 22, 23, 24, 25, 26, 27, 28, 29, 30, 31, 32, 33, 34), said method comprising the steps:
- (E1) the bleed air is conveyed to said power turbine in order to make it possible for said compressor to be driven by said power turbine,
- (E2) the fresh outside air is supplied to said compressor in order for said air to be compressed by said compressor,
- (E3) the air compressed by said compressor is conveyed by said pipe network to said primary cooling exchanger (PHX), then to said cabin after at least passing through a water extraction loop (63,64) if the flight conditions so require,
- the air from the primary circuit of the said primary cooling exchanger (PHx) supplies, depending on flight conditions, either the primary circuit of the main cooling exchanger (MHx) or the network of pipes downstream of the said main cooling exchanger (MHx)
- (E4) the bleed air expanded by said power turbine is conveyed, on the basis of the flight conditions, either to the ram-air circulation channel upstream of the primary cooling exchanger (PHx) and downstream of the said main cooling exchanger (MHx) so as to form a thermal energy source of said ram air supplying the primary circuit of the primary exchanger (PHx), or to a manifold for mixing said bleed air with the air from said compressor.

12. Method for air conditioning a cabin of an aircraft according to claim 11, **characterized in that** it further comprises a step (E5) consisting in conveying air discharged from the cabin, referred to as recovery air, to an inlet of at least one turbine which is mechanically connected to said compressor and to said power turbine so as to form a pneumatic energy source for driving the air cycle turbine engine.
